# EUROPEAN PATENT APPLICATION

(11) **EP 4 844 607 A2**
(43) Date of publication of application: **25.11.2026**
(21) Application number: 26185407.9
(22) Date of filing: 05.11.2020
(51) Int. Cl.: G06F 16/635

(54) **IDENTIFICATION OF MEDIA ITEMS FOR TARGET GROUPS**

(62) Document number(s) of the earlier application(s) in accordance with Art. 76 EPC: 20803152.6 / 4 241 176
(71) Applicant: Musimap SA, 4000 Liège (BE)
(72) Inventor: LEBECQUE, Pierre, 4910 Theux (BE); DECOTTIGNIES, Philippe, 59600 Maubeuge (FR); LIDY, Thomas, 1040 Wien (AT); WEISS, Thomas, 5441 Abentau (AT); SPECHTLER, Andreas, 5082 Groedig - Salzburg (AT)
(74) Representative: MERH-IP Matias Erny Reichl Hoffmann Patentanwälte PartG mbB

(57) **Abstract**

The disclosure relates to a method for determining a best matching media content descriptor set. The method comprises obtaining a target profile having a plurality of profile scores; mapping the target profile to a set of target content descriptors having a plurality of features, the mapping by applying at least one mapping rule that defines how a feature of a target content descriptor set is computed from profile scores; obtaining a plurality of media content descriptor sets, each media content descriptor set associated with a media item or a group of media items and having features comprising semantic descriptors for the respective media item or group of media items, the semantic descriptors comprising at least one emotional descriptor for the media item or group of media items; and searching for at least one media content descriptor set having the best matching content descriptor set with respect to the target content descriptor set.

## Description

### Background

The present application relates to analyzing media content for determining media content descriptors, media profiles, emotional profiles and personality profiles from generated semantic descriptors of media items. The media content descriptors, media profiles, emotional profiles and personality profiles may be used in a number of use cases, e.g., for determining media items that match a target profile or for determining media users having a personality profile that matches the target profile. The use cases may include media recommendation engines, virtual reality, smart assistants, advertising (targeted marketing) and computer games.

### Summary

In a broad aspect, the present disclosure relates to determining a media content descriptor set that best matches a target content descriptor set, from a plurality of media content descriptor sets associated with media items. A media item can be any kind of media content, in particular audio or video clips. Audio media items preferably comprise music or musical portions and preferably are pieces of music. Pictures, series of pictures, videos, slides and graphical representations are further examples of media items. The media content descriptor sets comprise semantic descriptors of the respective media item or group of media items.

The method for determining a best matching media content descriptor set comprises obtaining a target profile having a plurality of profile scores for elements of the profile. Typically, a target profile is based on a personality scheme that defines a number of profile elements comprising attribute - value pairs that represent personality traits. A value for a profile element is also called a profile score. Examples of personality schemes are Myers-Briggs type indicator (MBTI), Ego Equilibrium, Big Five personality traits (Openness, Conscientiousness, Extraversion, Agreeableness, Neuroticism - OCEAN), or Enneagram. Other schemes that define personality profile elements are possible.

The target profile is mapped to a set of target content descriptors having a plurality of features. The mapping may be performed by applying at least one mapping rule that defines how a feature of a target content descriptor set is computed from profile scores.

Next, a plurality of media content descriptor sets for one or more media items is obtained. Each media content descriptor set is associated with a media item or a group of media items. A set of media content descriptors for a media item (also called media profile of the media item, or musical profile in case of a musical media item) or a group of media items comprises a number of media content descriptors (also called features) characterizing the media item in terms of different aspects. A media content descriptor set comprises, amongst optional other descriptors, semantic descriptors of the media item (group). A semantic descriptor describes the content of a media item on a high level, such as the genre that the media item belongs to. In that sense, it may classify the media item into one of a number of semantic classes and indicates to which semantic class the media item belongs with a high probability. For example, a semantic descriptor may be represented as a binary value (0 or 1) indicating the class membership of the media item, or as a real number indicating the probability that the media belongs to a semantic class. A semantic descriptor may be an emotional descriptor indicating that the media item corresponds with an emotional aspect such as a mood. An emotional descriptor may classify the media item into one or more of a number of emotional classes and indicates to which emotional class the media item belongs with a high probability. An emotional descriptor may be represented as a binary value (0 or 1) indicating the class membership of the media item, or as a real number indicating the probability that the media belongs to an emotional class.

The media content descriptors may be calculated from the identified media item, or retrieved from a database where pre-analyzed media content descriptors for a plurality of media items are stored. Like this, the step of obtaining a set of media content descriptors for each of the identified one or more media items may comprise retrieving the set of media content descriptors for a media item from a database. The step of obtaining media content descriptor sets may be performed before the target profile is obtained and mapped to target content descriptors. Some media content descriptors have numerical values quantifying the extent of the respective semantic descriptors and/or emotional descriptors present for the media item. For example, a numerical media content descriptor may be normalized and have a value between 0 and 1, or between 0% and 100%.

The method further comprises searching for at least one media content descriptor set being the best matching content descriptor set with respect to the target profile and its target content descriptors. The search for the best matching content descriptor set may comprise comparing the target content descriptor set with the plurality of media content descriptor sets of the media items.

The identified at least one best matching media content descriptor set is/are then selected for further activities related to the target profile, such as receiving information associated with the target profile. If the target profile corresponds to a brand or product, this allows selecting users or user groups that best match to the product or brand in terms of their personalities or emotions. If the target profile corresponds to an individual user or a user group, a media item corresponding to the best matching media content descriptor set may be selected for playback or recommendation to the user or the user group.

The result of the determining step may be displayed on a computing device or transmitted to a database server. For example, an identification of the at least one determined media content descriptor set is transmitted to a database server. The identification of the determined at least one media content descriptor set may be used for a number of use cases such as for determining media users having a personality profile that matches the target profile, e.g. for media recommendation engines, smart assistants, smart homes, advertising, product targeting, marketing, virtual reality and gaming.

The set of media content descriptors for a media item and/or the set of target content descriptors may further comprise one or more acoustic descriptors for the media item. An acoustic descriptor (also called acoustic attribute) of the media item may be determined based on an acoustic digital audio analysis of the media item content. For example, the acoustic analysis may be based on a spectrogram derived for the audio content of the media item. Various techniques for obtaining acoustic descriptors from an audio signal may be employed. Examples of acoustic descriptors are tempo (beats per minute), duration, key, mode, rhythm presence, and (spectral) energy.

The set of media content descriptors for a media item may be determined, at least partially, based on one or more artificial intelligence model(s) that determine(s) one or more emotional descriptor(s) and/or one or more semantic descriptor(s) for the media item. The one or more semantic descriptors may comprise at least one of genres, or vocal attributes such as voice presence, voice gender (low- or high-pitched voice, respectively). Examples of emotional descriptors are musical moods, and rhythmic moods. The artificial intelligence model may be based on machine learning techniques such as deep learning (deep neural networks). For example, artificial neural networks may be used to determine the emotional descriptors and semantic descriptors for the media item. The neural networks may be trained by an extensive set of data, provided by music experts and data science experts. It is also possible to use an artificial intelligence model or machine learning technique (e.g. a neural network) to determine acoustic descriptors (such as bpm or key) of a media item.

Segments of a media item may be analyzed and the set of media content descriptors for the media item is determined based on the results of the analysis of the individual segments. For example, a media item may be segmented into media item portions and acoustic analysis and/or artificial intelligence techniques may be applied to the individual portions, and acoustic descriptors and/or semantic descriptors generated for the portions, which are then aggregated to form acoustic descriptors and/or semantic descriptors for the complete media item, in a similar way as the media items' media content descriptors are aggregated for an entire group of media items.

A profile score (i.e. a value of an attribute - value pair of a profile element) of the target profile may be used by a mapping rule that defines how a feature of a target content descriptor is computed from the profile score. The mapping rule may define which and how a profile score contributes to a feature of a target content descriptor set. For example, a target content descriptor feature is determined based on weighted profile scores. Based on the weighting, different scores may contribute with a different extent to the target content descriptor. Further, a feature of the target content descriptor may be determined based on the presence or the absence of a target profile score. In other words, a contribution to a feature of a content descriptor set may be made if a score for a given profile element is present. Alternatively, a contribution to a content descriptor feature for the case that a profile score is supposed to be not present may be expressed by weighting the difference of 1 minus the score value (having a value between 0 and 1).

The mapping rule may be learned by a machine learning technique. For example, the weights with which target profile scores contribute to a target content descriptor features may be determined by machine learning using a multitude of target profiles (real-world user profiles) and a suitable machine learning technique that is able to determine rules and/or weights on how to map from content descriptors to profile scores and vice versa. In addition, such machine learning technique may determine which content descriptor can contribute to a profile score and select the respective content descriptor and vice versa.

The search for the best matching media content descriptor set(s) may be based on comparing the target content descriptor set with the plurality of media content descriptor sets. For example, the comparing of target and media content descriptor sets may be based on matching content descriptor elements and selecting content descriptor sets of media items having same or similar elements as the target content descriptors. Further, the comparing of content descriptor sets may be based on a similarity search where corresponding elements of target and media content descriptor sets are compared and matching score values indicating the similarity of respective pairs of content descriptor sets are computed. A matching score for a pair of target and media content descriptor sets may be based on individual matching scores of corresponding elements of content descriptor sets. For example, the differences between corresponding values (scores) of the content descriptor sets may be computed (e.g. the Euclidian distance, Manhattan distance, Cosine distance or others) and a matching score for the compared pairs of target and media content descriptor sets calculated therefrom. A plurality of best matching media content descriptor sets may be determined and ranked according to their matching scores. This allows determining the best matching media content descriptor set, the second-best matching, etc.

The comparing of content descriptor sets may further depend on the context or environment of a user or user group corresponding to the target profile or the media content descriptor set. Examples of context or environment are the user's location, day of time, weather, other people in the vicinity of the user. Similar contexts or examples may be employed for user groups.

In embodiments addressing the selection of suitable media items for a user or a user group, the target profile corresponds to an individual user or a user group and is based on a personality scheme that defines a number of profile elements comprising attribute - value pairs that represent personality traits. A value for a profile element is also called a profile score. Examples of personality schemes are Myers-Briggs type indicator (MBTI), Ego Equilibrium, Big Five personality traits (Openness, Conscientiousness, Extraversion, Agreeableness, Neuroticism - OCEAN), or Enneagram,
The target profile may be determined based on a playlist or streaming history of the user or the user group identifying a group of media items associated with the user or user group. The media items may be identified in the playlist by referring to the storage location of the media items (e.g. via URLs), or by listing the names or titles of the media items (e.g. artist, album, song) or by unique identifiers (e.g. ISRC, MD5 sums, audio identification fingerprint, etc.). The storage location of the corresponding audio/video file may be determined by a table lookup or search procedure.

The media items identified in the playlist allow to determine a personality profile of the user. If the media items relate to a short-term media consumption history of the user (e.g. the recently listened to pieces of music), the generated personality profile characterizes the current or recent mood of the user. If the media items relate to a playlist that identifies a long-term media item usage history of the user, the generated personality profile characterizes a long-term personality profile of the user. For some embodiments, in particular for advertising and branding use cases, it is also possible to consider a mix between the long-term personality profile and the short-term personality profile (based on the moods of the recently listened songs) as relevant personality profile for the user. In other embodiments, the target profile may be determined based on a short-term media consumption history of the user or the user group and characterizes the current mood of the user or the user group.

A further media item corresponding to the best matching media content descriptor set may be selected for presentation to the user or user group. The media item may be an audio or video clip that is selected for playback or recommendation to the user or the user group. Information associated with the media item corresponding to the best matching media content descriptor set may be provided to the user or to a user device associated with the user.

In other embodiments addressing the identification of suitable users that match a target profile, the target profile corresponds to a product or a brand and each media content descriptor set is associated with a user or a user group. The method further may further comprise determining a user or user group associated with the media content descriptor set that best matches with respect to the target content descriptor set. In other words, the user or user group having an emotional profile that best matches the target content descriptor set for the product or brand is identified and can be selected for further activities. The target content descriptors may be determined from elements of the product or brand profile by applying mapping rules as explained above.

A media content descriptor set may comprise aggregated features that characterize a group of media items that have been presented to the user or user group, in particular media items identified in a playlist associated with the user or user group. In that respect, a set of aggregated media content descriptors for the entirety of the one or more media items of a group, based on the respective media content descriptors of the individual media items, may be determined. The aggregated media content descriptors characterize semantic descriptors and/or emotional descriptors (and possibly acoustic descriptors) of the media items in the group. A set of aggregated media content descriptors comprising moods and associated with a user or user group is also called an emotional profile of the user or user group. Aggregated media content descriptors may be calculated by averaging the values of the individual media content descriptors of the media items, in particular for media content descriptors having numerical values. It is to be noted that other methods than simple averaging the values of the individual media content descriptors are possible. For example, root mean square (RMS) or other approaches which emphasize larger values in the aggregation (e.g. "log-mean-exponent averaging") may be applied. Thus, the step of obtaining content descriptor sets for a plurality of media items may comprise calculating aggregated numerical content descriptors from respective numerical content descriptors of the media items of the group.

Furthermore, a user personality profile may be provided for a user or user group associated with a media content descriptor set (e.g. associated with the emotional profile of the user or user group). For example, a user personality profile may be provided for the user having an emotional profile that best matches to the target content descriptor set. The user personality profile comprises a plurality of personality scores for elements of the profile that represent personality traits of the user or user group based on a personality scheme. The personality scheme may be a scheme as mentioned above. The user personality profile corresponding to the best matching content descriptor set may be selected for further activities, stored and/or forwarded to other computing devices.

The user personality profile may be generated by mapping features of the associated (aggregated) media content descriptor set (e.g. an emotional profile) to personality scores. Depending on the media items corresponding to the media content descriptor set, the user personality profile may characterize the user's long-term personality or the user's short-term mood. A personality score (i.e. a value of an attribute - value pair for a profile element) of the user personality profile may be determined based on a mapping rule that defines how a personality score is computed from the set of (possibly aggregated) media content descriptors associated with the user (i.e. his/her emotional profile). The mapping rule may define which and how an (aggregated) media content descriptor contributes to a personality score. For example, a personality score is determined based on weighted aggregated numerical media content descriptors. Based on the weighting, different features may contribute with a different extent to the score. Further, a personality score of the personality profile may be determined based on the presence or the absence of an (aggregated) media content descriptor. In other words, a contribution to a score may be made if an (aggregated) media content descriptor is present, e.g. by weighting a normalized numerical aggregated feature. Alternatively, a contribution to a score for the case that an (aggregated) media content descriptor is supposed to be not present may be expressed by weighting the difference of 1 minus the normalized numerical aggregated feature value (having a value between 0 and 1). The mapping rule may be learned by a machine learning technique similar as mentioned above for the mapping from target profile scores to a target content descriptor.

A further media item corresponding to the target profile may be selected for presentation to the determined user or user group. The media item may be an audio or video clip that is selected for playback or recommendation to the user or the user group. Information associated with the media item corresponding to the best matching media content descriptor set may be provided to the user or to a user device associated with the user.

An electronic message comprising information on the product or brand may be automatically generated for the determined user or user group and the generated message electronically transmitted to the user or user group. The electronic message may comprise information on the product or brand associated with the target personality profile, for example the electronic message may comprise the selected further media item corresponding to the target profile.

The comparing the target content descriptor set with the plurality of media content descriptor sets and determining at least one media content descriptor set being the best matching content descriptor set may be performed repeatedly, e.g. after a determined period of time or after a number of media items have been presented to a user (group). That way, the determining of a further media item can be updated regularly, e.g. in real-time after the presentation of media items to the users and based on the most recently determined media content descriptor sets. This allows an adaptive media presentation service where new media items corresponding to the target profile are presented to the user(s) depending on their previously consumed media items.

The comparing the target content descriptor set with the plurality of media content descriptor sets and determining at least one media content descriptor set being the best matching content descriptor set may be generated on a server platform. The method may further comprise transmitting an identification of consumed media items associated with a user from a user device associated with the user to the server platform. Thus, the server receives information on the user's media consumption (e.g. playlists) and can determine the user's media content descriptor sets and personality profile from that information. As mentioned above, this may be performed repeatedly. The user device may be any user equipment such as a personal computer, a tablet computer, a mobile computer, a smartphone, a wearable device, a smart speaker, a smart home environment, a car radio, etc. or any combined usage of those. After the server has determined the best matching content descriptor set, it can transmit a selected media item corresponding to the target profile to the user device where this information is received and presented to the user, or causes a playback of the selected media item.

In another aspect of the disclosure, a computing device for performing any of the above method is proposed. The computing device may be a server computer comprising a memory for strong instructions and a processor for performing the instructions. The computing device may further comprise a network interface for communicating with a user device. The computing device may receive information about media items consumed by the user from the user device. The computing device may be configured to generate media content descriptor sets and personality profiles as disclosed above. Depending on the use case, the media content descriptor sets and/or personality profiles may be used for recommending similar media items or determining media users having a personality profile that matches the target profile or displaying advertising the media user might be interested in. Information about an identified further media item corresponding to the target profile may be transmitted to the user device.

Implementations of the disclosed devices may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Another aspect of the present disclosure may relate to computer software, a computer program product or any media or data embodying computer software instructions for execution on a programmable computer or dedicated hardware comprising at least one processor, which causes the at least one processor to perform any of the method steps disclosed in the present disclosure.

While some example embodiments will be described herein with particular reference to the above application, it will be appreciated that the present disclosure is not limited to such a field of use and is applicable in broader contexts.

Notably, it is understood that methods according to the disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Other and further example embodiments of the present disclosure will become apparent during the course of the following discussion and by reference to the accompanying drawings.

### Brief Description of Figures

Example embodiments of the disclosure will now be described, by way of example only, with reference to the accompanying drawings in which:
Figure 1 schematically illustrates the operation of an embodiment of the present disclosure;
Figure 2a illustrates the generation of semantic descriptors from audio files;
Figure 2b illustrates the generation of semantic descriptors by an audio content analysis unit;
Figure 3a illustrates the mapping of mood content descriptors to the E-I (extraversion - introversion) personality score of the MBTI personality scheme;
Figure 3b illustrates the mapping of mood content descriptors to the openness personality score of the OCEAN personality scheme;
Figure 4a illustrates an example for the graphical presentation of a personality profile of the MBTI personality scheme;
Figure 4b illustrates an example for the graphical presentation of a personality profile of the OCEAN personality scheme;
Figure 5 shows an embodiment for a method to determine a user or user group; and
Figure 6 illustrates the mapping from attributes of a product profile to mood content descriptors.

### Detailed Description

According to a broad aspect of the present disclosure, characteristics of media items such as pieces of music are determined by a personality profiling engine for generating a personality profile or an emotional profile corresponding to the analyzed media items. This allows a variety of new applications (also called 'use cases' in this disclosure) to enable classification, search, recommendation and targeting of media items or media users. For example, personality profiles or emotional profiles may be employed for recommending similar media items or displaying advertising a media user might be interested in.

For example, if the input to the personality profiling engine is a short-term music listening history of a user, a personality profile characterizing the mood of the music listener can be determined from the recently played music of the user. If the input is a long-term music listening history, it is possible to determine the general personality profile of the music listener. One can even compute the difference between the long-term personality profile and the current mood of the user and determine if the user is in an exceptional situation.

The personality profile generated by the personality profiling engine allows to detect e.g. a music listener's emotional signature, focusing on the moods, feelings and values that define humans' multi-layered personalities. This allows addressing, e.g., the following questions: Is the listener self-aware or spiritual? Does he/she like exercising or travelling?

In an audio example, one can find similar sounding music tracks based on the emotional descriptors and/or semantic descriptors of an audio file. A media similarity engine using generated emotional profiles may leverage machine learning or artificial intelligence (AI) to match and find musically and/or emotionally similar tracks. Such media similarity engine can listen to and comprehend music in a similar way people do, then searches millions of music tracks for particular acoustic or emotional patterns, matching the requirements to find the music that is needed within seconds. Based on the generated profiles, one can search e.g. for instrumental or vocal tracks only, or according to other semantic criteria, such as genres, tempo, moods, or low- vs. high-pitched voice.

The basis for the proposed technology is the personality profiling engine that performs tagging of media items with media content descriptors based on audio analysis and/or artificial intelligence, e.g. deep learning algorithms, neural networks, etc. The personality profiling engine may leverage AI to enrich metadata, tagging media tracks with weighted moods, emotions and musical attributes such as genre, key and tempo (in beats per minute - bpm). The personality profiling engine may analyze moods, genres, acoustic attributes and contextual situations in media items (e.g. a music track (song)) and obtain weighted values for different "tags" within these categories. The personality profiling engine may analyze a media catalogue and tag each media item within the catalogue with corresponding metadata. Media items may be tagged with media content descriptors e.g. regarding
- acoustic attributes (bpm, key, energy...);
- moods / rhythmic moods;
- genres;
- vocal attributes (instrumental, high-pitched voice, low-pitched voice); and
- contextual situation.

Within the moods category for tagging music from an "emotional" perspective, the personality profiling engine may output, for example, values for up to 35 "complex moods" which may be classified taxonomy-wise within 18 sub-families of moods that are structured into 6 main families. The 6 main families and 18 sub-families comprise all human emotions. The applied level of detail in the taxonomy of moods can be refined arbitrarily, i.e. the 35 "complex moods" can be further sub-divided if needed or further "complex moods" added.

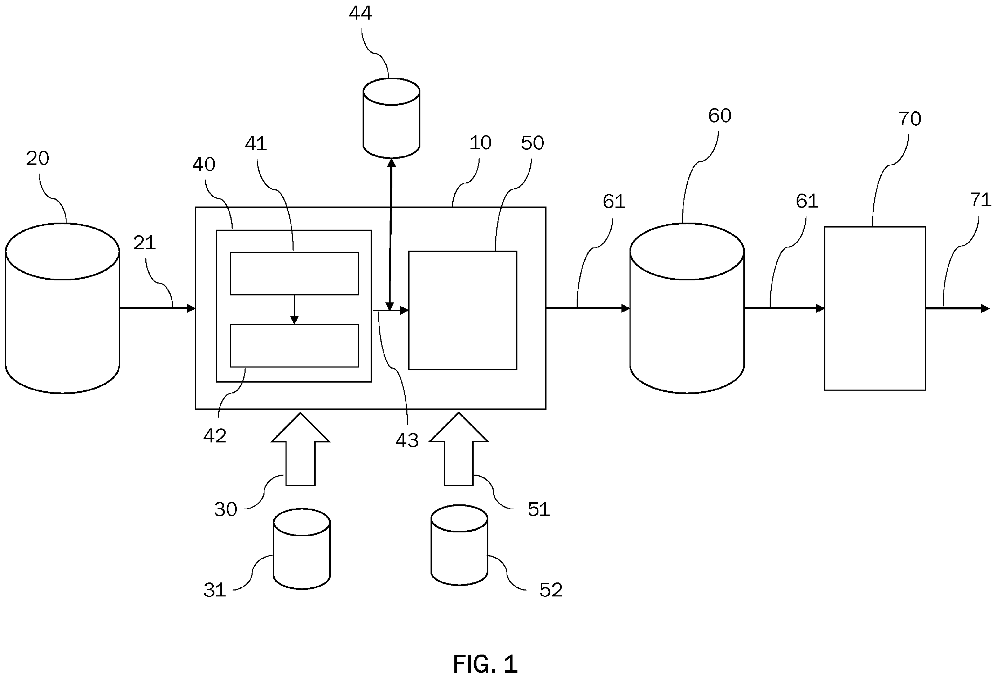

Fig. 1 schematically illustrates the operation of an embodiment of the present disclosure, for generating personality profiles and determining similarities in profiles to make various recommendations such as for similar media items or matching users or user groups. A personality profiling engine 10 receives one or more media files 21 from a media database 20. For retrieving the media items from the database 20, the media files are identified in a media list 30 provided to the personality profiling engine 10. The media list 30 may be a playlist of a user retrieved from a playlist database that stores the most recent media items that a user has played and user-defined playlists that represent the user's media preferences.

The media files 21 are analyzed to determine media content descriptors 43 comprising acoustic descriptors, semantic descriptors and/or emotional descriptors for the audio content. Some media content descriptors 43 are determined by an audio content analysis unit 40 comprising an acoustic analysis unit 41 that analyses the acoustic characteristics of the audio content, e.g. by producing a frequency-domain representation such as a spectrogram of the audio content, and analyzing the time-frequency plane with methods to compute acoustic characteristics such as the tempo (bpm) or key. The spectrogram may be transformed according to a perspective and/or logarithmic scale, e.g. in the form of a Log-Mel-Spectrogram. Media content descriptors may be stored in a media content descriptor database 44.

The audio content analysis unit 40 of the personality profiling engine 10 further comprises an artificial intelligence unit 42 that uses an artificial intelligence model to determine media content descriptors 43 such as emotional descriptors and/or semantic descriptors for the audio content. The artificial intelligence unit 42 may operate on any appropriate representation of the audio content such as the time-domain representation, the frequency-domain representation of the audio content (e.g. a Log-Mel-Spectrogram as mentioned above) or intermediate features derived from the audio waveform and/or the frequency-domain representation as generated by the acoustic analysis unit 41. The artificial intelligence unit 42 may generate, e.g., mood descriptors for the audio content that characterize the musical and/or rhythmical moods of the audio content. These AI models may be trained on proprietary large-scale expert data.

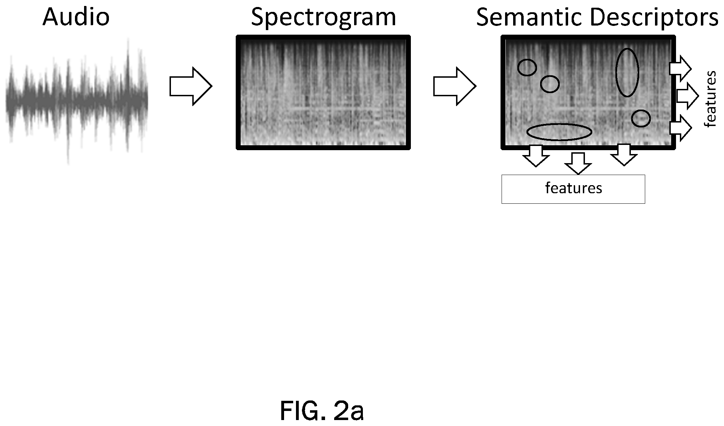

Fig. 2a illustrates an example for the generation of semantic descriptors from audio files by an audio content analysis unit. In embodiments, the audio file samples are optionally segmented into chunks of audio and converted into a frequency representation such as a Log-Mel-Spectrogram. The audio content analysis unit 40 then applies various audio analysis techniques to extract low and/or mid and/or high-level semantic descriptors from the spectrogram.

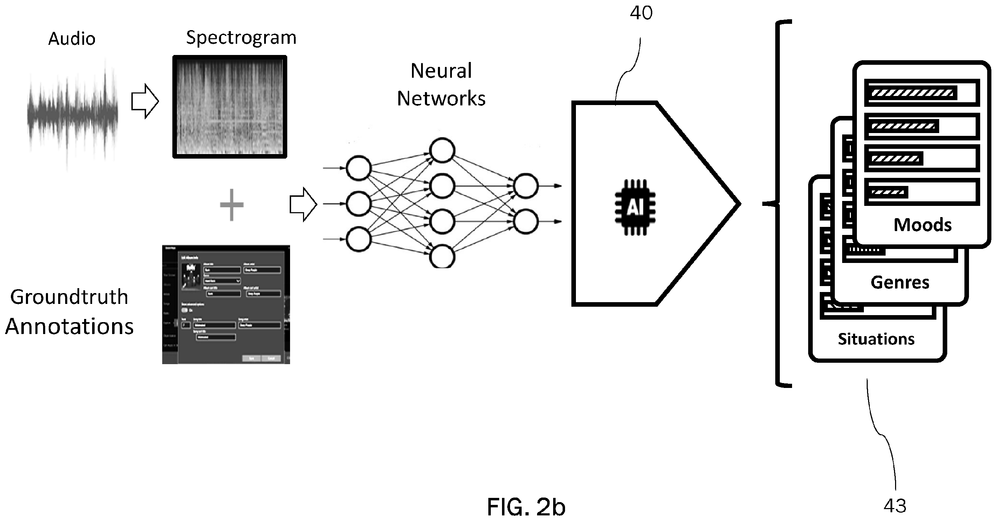

Fig. 2b further illustrates an example for the generation of semantic descriptors by the audio content analysis unit 40. While Fig. 2a illustrates a direct audio content analysis by traditional signal processing methods, Fig. 2b shows a neural-network powered audio content analysis, which has to learn from "groundtruth" data ("prior knowledge") first. Audio files are converted to a spectrogram and one or more neural networks are applied to generate media content descriptors 43 such as moods, genres and situations for the audio file. The neural networks are trained for this task based on large-scale expert data (large and detailed "groundtruth" media annotations for supervised neural network training). In an example for the generation of sematic descriptors by the artificial intelligence unit 42, spectrogram data for audio files are fed as input to neural networks that generate, as output, semantic descriptors. In embodiments, one or more convolutional neural networks are used to generate e.g. descriptors for genres, rhythmic moods, voice family. Other network configurations and combinations of networks can be used as well.

A mapping unit 50 maps the media content descriptors 43 for the audio file to a media personality profile 61, by applying mapping rules 51 received from a mapping rule database 52. The mapping rules 51 may define which media content descriptor(s) is/are used for computing a profile score (i.e. the value for a profile attribute), and which weight to be applied to a media content descriptor. The mapping rules 51 may be represented as a matrix that link media content descriptors and profile attributes, and providing the media content descriptor weights. The generated personality profile 61 may be provided to the media similarity engine 70 for determining similar profiles, or stored in a profile database 60 for later usage.

The mapping unit 50 may also operate in the reverse direction and map a personality profile 61, via mapping rules 51 from the mapping rule database 52, to media content descriptors 43. The mapping rules 51 may define which profile score (i.e. the value for a profile attribute) is/are used for computing a feature of a media content descriptor set, and which weight to apply in the mapping to the profile score. The mapping rules 51 may be represented as a matrix that link profile attributes and media content descriptors, and providing the profile score weights. For example, a target profile defined in a personality scheme may be mapped via mapping rules to a target content descriptor set.

In case a personality profile for a group of media items is generated, the media content descriptors 43 for the individual media items in the group are generated (or retrieved from the media content descriptor database 44) and aggregated media content descriptors are generated for the entire group of media items. Aggregation of numerical media content descriptors may be implemented by calculating the average value of the respective media content descriptor for the group of media items. Other aggregation algorithms such as Root-Mean-Square (RMS) may be used as well. The mapping unit 50 then operates on the aggregated media content descriptors (e.g. an emotional profile) and generates a personality profile for the entire group of media items.

The media similarity engine 70 can receive profiles directly from the personality profiling engine 10 or from the profile database 60, as shown in Fig. 1. The media similarity engine 70 compares profiles to determine similarities in profiles by matching profile elements or based on a similarity search as disclosed below. Once similar profiles 71 to a target profile are determined, corresponding media items or users may be determined and respective recommendations made. For example, one or more media items matching a playlist of a user may be determined and automatically played on the user's terminal device. Other use cases are set out in this disclosure.

The media similarity engine 70 may also perform a search in the content descriptor domain, i.e. compare content descriptor sets to determine similar content descriptor sets by matching respective features of content descriptor sets. For example, based on a target profile and mapping rules as explained above, conditions for features in (aggregated) media content descriptor sets (e.g. emotional profiles) are determined (e.g. a certain semantic descriptor or emotional descriptor being present, of having a specific value, or being in a specific range) and applied to the media content descriptor sets to identify which media content descriptor sets are matching, i.e. meet these conditions.

Alternatively, the search may be based on a similarity search that calculates matching scores for pairs of content descriptor sets (e.g. based on the Euclidian or other distance metrics), similar to the similarity search in the profile domain explained above. For example, a matching score is calculated for each (aggregated) media content descriptor set with regards to a target content descriptor set, and the media content descriptor sets ranked according to their matching scores. This allows to determine the best matching media content descriptor sets.

As mentioned before, the personality profiling engine can use machine learning or deep learning techniques for determining emotional descriptors and semantic descriptors of media items. The training may be based on a database composed of a large number of data points in order to learn relations to analyze a person's music tastes and listening habits. The algorithm can retrieve the psych-emotional portrait of a user and complement existing demographic and behavioral statistics to create a complete and evolutive user profile. The output of the personality profiling engine is psychologically-motivated user profiles ("personality profiles") for users from analyzing their music (playlists or listening history).

The personality profiling engine can derive the personality profile of a user from a smaller or larger number of media items. If based e.g. on the last 10 or more music items played by the user on a streaming service, the engine can compute a short-term ("instant") profile of the user (reflecting the "current mood" of a music listener). If (a larger number of) music items represent the longer-term listening history or favorite playlists of the user, the engine can compute the inherent personality profile of the user.

The personality profiling engine may use advanced machine learning and deep learning technologies to understand the meaningful content of music from the audio signal, looking beyond simple textual language and labels to achieve a human-like level of comparison. By capturing the musically essential information from the audio signal, algorithms can learn to understand rhythm, beats, styles, genres and moods in music. The generated profiles may be applied for music or video streaming service, digital or linear radio, advertising, product targeting, computer gaming, label, library, publisher, in-store music provider or sync agency, voice assistants / smart assistants, smart homes, etc.

The personality profiling engine may apply advanced deep learning technologies to understand the meaningful content of music from audio to achieve a human-like level of comparison. The algorithm can analyze and predict relevant moods, genres, contextual situations and other key attributes, and assign weighted relevancy scores (%).

The media similarity engine can be applied for recommendation, music targeting and audio-branding tasks. It can be used for music or video streaming service, digital or linear radio, fast-moving consumer goods (FMCG), also known as consumer-packaged goods (CPG), advertiser, creative agency, dating company, in-store music provider or in e-commerce.

The personality engine may be configured to generate a personality profile based on a group of media items associated with a user by performing the following method. In a first step, a group listing comprising an identification of one or more media items is obtained, e.g. in form of a playlist defined by a user. Next, a set of media content descriptors for each of the identified one or more media items of the group is generated or retrieved from a database of previously analyzed media items. The set of media content descriptors comprises at least one of: acoustic descriptors, semantic descriptors and emotional descriptors of the respective media item. The method then comprises determining a set of aggregated media content descriptors for the entire group of the identified one or more media items (i.e. the user's emotional profile) based on the respective media content descriptors of the individual media items. Finally, the set of aggregated media content descriptors is mapped to the personality profile for the group of media items. The scores of the profile elements are calculated from the aggregated features of the set of aggregated media content descriptors.

In example embodiments, the personality profiling engine is applied to determine the mood of a media user. For example, the mood of a music listener is determined based on the input: "short-term music listening history"; or the general personality profile of a music listener is determined from the input: long-term music listening history. In further use cases, a person's personality profile may be related to other person's personality profiles, to determine persons of similar profiles (e.g. matching people, recommending people with similar profiles products (e-commerce) or suggesting people to connect with other people (friending, dating, social networks...)) for that particular moment.

The personality profiling engine may further be used for adapting media items such as music (e.g. current playlist and/or suggestions or other forms of entertainment (film, ...) or environments such as smart home) a) to the person's current mood and/or b) with the intent to change the person's mood (intent either explicitly expressed by the person, or implicit change intent triggered by system, e.g. for product recommendation, or optimizing (increasing) a user's retention on a platform).

The personality profiling engine can be used to compute the difference between the long-term personality profile and the current (mood) profile of a user, in order to determine how different a user's current mood is from his/her general personality. This is useful, for example, for adapting a recommendation in the short-term "deviation" of the user's general personality profile into a certain musical direction (depending on a certain listening context, time of the day, user's mood etc.); and for determining the display of an advertising (ad) that would normally fit a user's personality profile but not in this moment because the current mood profile of the current listening situation deviates. In both cases the recommendation or the ad placement may adapt to the user's individual situation at the moment.

The basis for these embodiments is the personality profiling engine which analyses a group of media items identified by a provided list. For example, audio tracks in a group of music songs (from digital audio files) are analyzed. The analysis may be e.g. through the application of audio content analysis and/or machine learning (e.g. deep learning) methods. The personality profiling engine may apply:
- Algorithms for low-, mid- and high-level feature extraction from audio. Examples for low-level features are audio waveform/spectrogram related features (or "descriptors"), mid-level features (or "descriptors") are "fluctuations", "energy" etc. and high-level features are semantic descriptors and emotional descriptors like genres or moods or key).
- Acoustic waveform and spectrogram analysis to analyze acoustic attributes such as tempo (beats per minute), key, mode, duration, spectral energy, rhythm presence and the like.
- Neural Network / Deep learning based models to analyze from audio input (e.g. via log Mel-frequency spectrograms, extracted from various segments of an audio track), high-level descriptors such as genres, moods, rhythmic moods and voice presence (instrumental or vocal), and vocal attributes (e.g. low-pitched or high-pitched voice). The neural network / deep learning models may have been trained on a large-scale training dataset comprising (hundreds of) thousands of annotated examples of the aforementioned categories tagged by expert musicologists. For example, deep learning convolutional neural networks may be used but other types of neural networks (such as recurrent neural networks) or other machine learning approaches or any mix of those may be used as an alternative. In embodiments, one model is trained for each category group of moods, genres, rhythmic moods, voice presence/vocal attributes. An alternative is to train one common model altogether, or e.g. one model for moods and rhythmic moods together, or even one model per each mood or genre itself.

The audio analysis may be performed on several temporal positions of the audio file (e.g. 3 times 15 seconds for first, middle and last part of a song) or also on the full audio file.

The output may be stored on segment level or audio track (song) level (e.g. aggregated from segments). The subsequent procedures may also be applied on segment level (e.g. to get the list of moods (or mood scores) per each segment; e.g. applicable for longer audio recordings such as classical music, DJ mixes, or podcasts or in the case of audio tracks with changing genres or moods). The personality profiling engine may store all derived music content descriptors with the predicted values or % values in one or more databases for further use (see below).

The output of the audio content analysis are media (e.g. music) content descriptors (also named audio features or musical features) from the input audio such as:
- tempo: e.g. 135 bpm
- key and mode: e.g. F# minor
- spectral energy: e.g. 67 % (100% is determined by the maximum on a catalog of tracks)
- rhythm presence: e.g. 55 % (100% is determined by the maximum on a catalog of tracks)
- genres: as a list of categories (each with a % value between 0 and 100, independent of others), e.g. Pop 80%, New Wave 60%, Electro Pop 33%, Dance Pop 25%
- moods: as a list of moods contained in the music (each with a % value between 0 and 100, independent of others), e.g. Dreaming 70%, Cerebral 60%, Inspired 40%, Bitter 16%
- rhythmic moods: as a list of moods contained in the music (each with a % value between 0 and 100, independent of others), e.g. Flowing 67%, Lyrical 53%
- vocal attributes: either instrumental (0 or 100%), or any combination of low-pitched and/or high-pitched voice between 50 and 100%

In an embodiment, the audio content analysis outputs:
- from the audio feature extraction: 14 mid- and high-level features + 52 low-level (spectral) features; and
- from the deep learning model: 67 genres, 35 moods (+ 24 through aggregation to sub-families and families, see below), 5 rhythmic moods, 3 vocal attributes.

Optionally, a subsequent post-processing on the values is performed, e.g. giving some of the genre, mood or other categories a higher or lower weight, by applying so-called adjustment factors. Adjustment factors adapt the machine-predicted values so that they become closer to human perception. The adjustment factors may be determined by experts (e.g. musicologists) or learned by machine learning; they may be defined by one factor per each semantic descriptor or emotional descriptor, or by a non-linear mapping from different machine-predicted values to adjusted output values.

Furthermore, optionally an aggregation may be performed of music content descriptors to create values for a group or "family" of music content descriptors, usually along a taxonomy: In an example, the 35 moods predicted by the deep learning model are aggregated to their 18 parent "sub-families" of moods and 6 "main families", forming 59 moods in total (along a taxonomy of moods).

The analysis may be performed on song-level for a set of music songs, delivered in the form of audio (compressed or uncompressed, in various digital formats). For the generation of personality profiles, music content descriptors of multiple songs and their values may be aggregated for a group of multiple songs (usually referred to as "playlist").

In some embodiments (use cases), the current mood of a listener is determined. In other use cases, the long-term personality profile of the listener is determined by the personality profiling engine. In both cases, the input is a list of music songs and the output is a user's personality profile (along one or more personality profile schemes). In order to determine the mood of a music listener, the input is the last few recently listened songs. These songs allow to get an idea of the current mood profile of the user. For determining the general (long-term) personality profile of a music listener, the input is (usually a larger set of) songs that represent the (longer-term) history of the user.

The generation of personality profiles may be based on characteristics of the music a user listens to, comprising for example (but not limited to): moods, genres, voice presence, vocal attributes, key, bpm, energy and other acoustic attributes (= "musical content descriptors", "audio features" or "music features"). This may be determined per each song's music content characteristics.

In embodiments, an aggregation is done from n songs' music content descriptors to aggregated content descriptors i.e. an emotional profile of a user, e.g. as an average of the numeric (%) values of each of the songs in the set (playlist), or applying more complex aggregation procedures, such as median, geometric mean, RMS (root mean square) or various forms of weighted means.

In embodiments, songs in a user's playlist or a user's listening history may have been pre-analyzed to extract the music content descriptors, which may contain numeric values (e.g. in the range of 0-100% for each value). For each content descriptor (e.g. mood "sensibility"), the root mean squared (RMS) of all the individual songs' "sensibility" values may be computed and stored. The output of this aggregation will be a set of music content descriptors having the same number of descriptors (attributes) as each song has. This aggregated music content descriptor (emotional profile) will be used in the second stage of the personality profile engine to determine the user's personality profile.

In some embodiments, instead of a user's playlist, also an album or an artist's discography (all tracks of an artist) can be used as the input for aggregation. Similarly, an aggregation of said music content descriptors (using different methods as disclosed above) for a number of tracks (which can represent an album or an artist or a playlist) can be performed.

Once the aggregated value for each music content descriptor has been calculated, a personality profile is generated. For example, a mapping is performed from the elements in the emotional profile (which represent music content descriptors aggregated for n songs) to one or more personality profile(s). The mapping translates moods, genres, style, etc. to psych-emotional user characteristics (personality traits). The mapping is performed from said musical content descriptors to the scores of the personality profile (including personality traits / human characteristics). Rules may be defined to map from music content descriptors and their values to one or more types of personality profiles defined by personality profile schemes.

The output of the personality profile engine is a range of numeric output parameters, called personality profile attributes and scores, describing the personality profile of a user.

A personality profile may be defined according to various personality profile schemes such as:
- MBTI (Myers-Briggs type indicator)
- Ego Equilibrium
- OCEAN (also known as Big Five personality traits)
- Enneagram

Each of these personality profile schemes is composed by personality attributes, for instance "extraversion" or "openness" and assigned scores (values) such as 51% or 88% (concrete examples are given below).

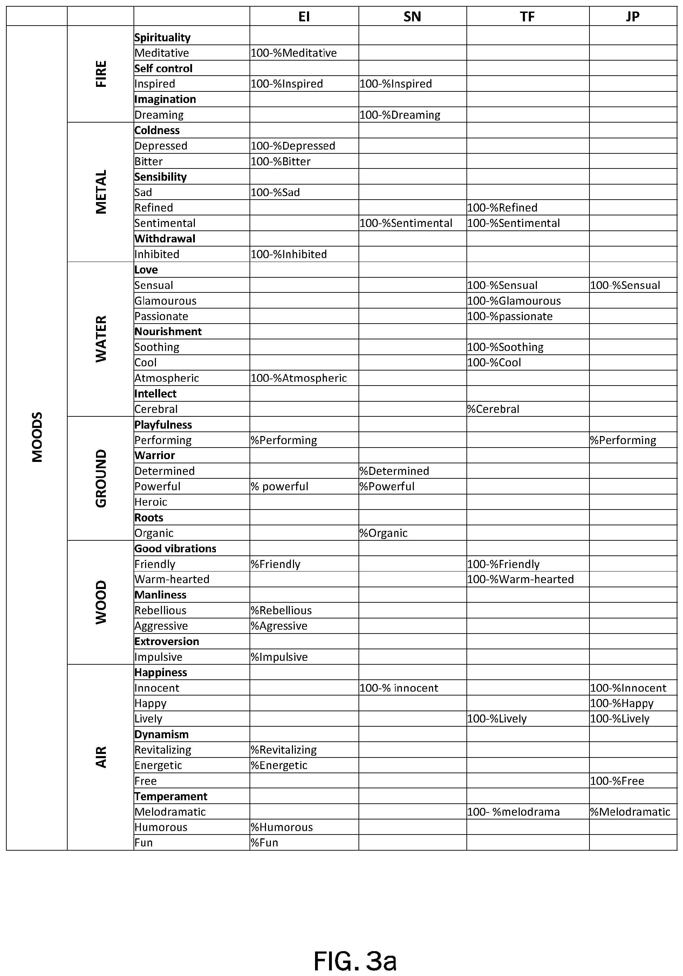

For all of these schemes, a mapping from music content descriptors to profile scores and vice versa may be used. Fig. 3a illustrates the mapping of mood content descriptors to the EI personality score of the MBTI personality scheme. The mapping may apply a matrix like in the example shown in Fig. 3a. Either the presence (% of a mood or other music content descriptor) or the absence (100 - % of the mood or other music content descriptor) may be relevant to compute a score (value) within a personality profile scheme.

Each scheme can have a number of "scores" that it computes, e.g. MBTI scheme computes 4 scores: EI, SN, TF, JP. For each score, one or more mapping rules may be defined, which affect how the score will be computed from the aggregated music content descriptors. For example, the score is equal to the sum of the values computed by the matrix divided by the number of values taken into account (i.e. a regular averaging mechanism).

For instance, the mood (comprised in the music content descriptors) "Withdrawal" is used in the EI calculation as part of the MBTI scheme. Fig. 3a illustrates an example for a rule matrix applied for the EI calculation from the moods section of the music content descriptors. The rule matrix shows how the presence of a mood or its absence can be used for calculating the EI score. Other music content descriptors may be included in the calculation in a similar manner.

In embodiments, the EI calculation comprises 17 rules incorporating 17 values from the music content descriptors. These rules follow psychological recipes, e.g. the rules within the group of "metal" define psychologically "closed shoulders", while the rules within the group "wood" define "open shoulders".

Similar computations may be made for other profiling matrixes, like OCEAN.

As mentioned, an MBTI personality profile has the following scores: EI, TF, JP, SN. Below is an example of representation of a MBTI personality profile and its scores:
"mbti":{"name":"INTJ","sources":{
"EI": 33.66403316629877,
"SN": 42.419498057065084,
"TF": 57.82423612828757,
"JP": 61.02633025243475}}

Depending on the score value, a basic score classification may be made. The classification may be based on comparing score values with specific threshold values. For example, the EI score in the MBTI scheme represents the balance between extraversion (E) and introversion (I) of the user. EI below 50% means introversion, while EI above 50% means extraversion. Thus, if EI < 50% a user may be assigned to the I (introversion) class, otherwise he is assigned to the E (extraversion) class. The other MBTI scores may be classified in a similar way.

The scores are defined as opposites on each axis, (E-I, S-N, T-F, J-P). In each pair of letters, the value determines which side of the trait the person is, decided by < 50% or > 50%. To deduct the letters from above example, usually for <50% the right letter of a letter pair is taken, for =>50% the left letter.

The results of scores for a generated profile may be further classified in general personality types, e.g. based on the basic classification results for the profile scores. For example, the following general personality types may be derived from the basic score classification results:
- ESTJ: extraversion (E), sensing (S), thinking (T), judgment (J)
- INFP: introversion (I), intuition (N), feeling (F), perception (P)

The profile in above example is classified as INTJ personality type. The classification of the 4-dimensional space of profile scores (EI, TF, JP, SN) into personality types allows a 2-dimensional arrangement of the personality traits in squares having a meaningful representation.

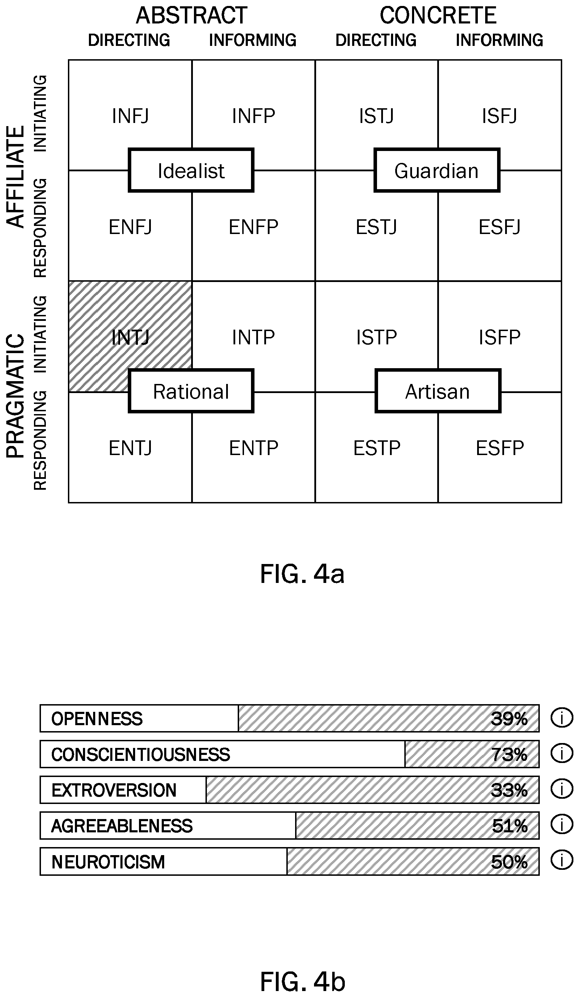

Fig. 4a shows a graphical representation of a personality profile according to the MBTI scheme where the classification result (INTJ) for a user's profile can be indicated in color. This diagram provides for an intuitive representation of the user's profile along the different psychological dimensions. A person classified as "INTJ" is interpreted as a "Mastermind, Scientist". Additional personality traits associated with this MBTI type may be output on the user interface.

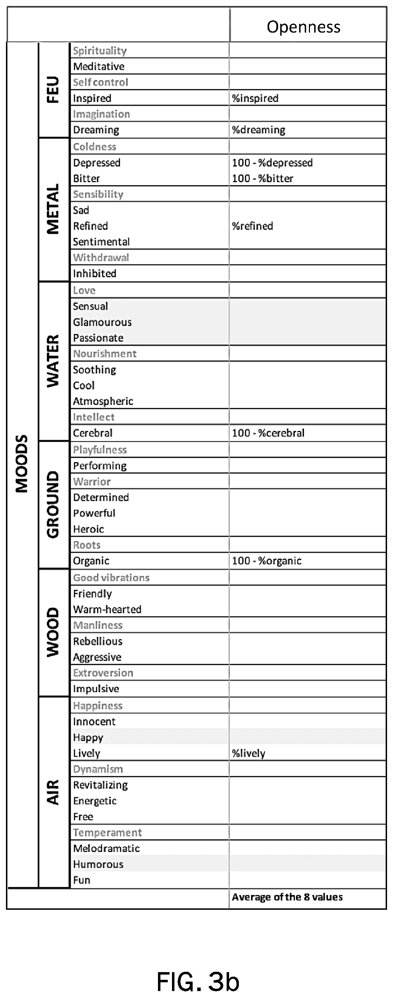

In the OCEAN personality profile scheme, the following scores for the "Big Five" mindsets are defined: Openness, Conscientiousness, Extraversion, Agreeableness, Neuroticism. Figure 3b illustrates the mapping of mood content descriptors to the openness personality score of the OCEAN personality scheme. Here is an example of a representation of an OCEAN personality profile and its scores:
"ocean":{
"agreeableness": 51.10149671582637,
"conscientiousness": 73.42223321884429,
"extraversion": 33.66403316629877,
"neuroticism": 50.21693055551433,
"openness": 39.72017677623826}

Fig. 4b shows a graphical representation of a personality profile according to the OCEAN scheme. This diagram provides for an intuitive representation of the user's profile along the different psychological dimensions.

In some embodiments, the personality profile can optionally be enriched or associated with additional person-related parameters characterizing from additional sources (e.g. age, sex and/or biological signals of the human body via body sensors (smart watch, sports tracking devices, emotion sensors, etc.)). Optionally the personality profile can also be enriched or associated with additional parameters characterizing the context and environment of the person (location, day of time, weather, other people in the vicinity).

In embodiments, the personality profiling engine and the media similarity engine are configured to select the best music for a given target user group. In this embodiment, a target group is defined and the media similarity engine selects matching music, e.g., for broadcast. This allows e.g. to propose music for an advertising campaign of a brand defined by its target consumer group. Further possible use cases are in-store music, advertising, etc.

For these embodiments, a target group of people (with the intention to find appropriate music for that target group; for music consumption, in-store music, advertising campaigns, and other use cases) is specified by one or more personality profiles following schemes such as MBTI, OCEAN, Enneagram, Ego-Equilibrium, or others, as described above. In addition, demographic parameters for the target group may be added.

A search (e.g. similarity search, or exact score matching) can be performed in the personality profiles space between the target group profile and "music personality profiles" for each individual song (i.e. the content descriptor set for the song mapped to a personality profile according to a personality scheme). Then, the "music personality profiles" from the songs that best match the target group personality profile are identified. In that respect, the personality profile scores for different personality profile schemes may be pre-computed for candidate songs. The best match for a target group of people is then found by a similarity search between the defined target group's profile scores and each song's personality profile scores.

Alternatively, the media similarity engine may use a mapping of personality profile schemes to musical content descriptors to find music relevant to the target group of people. Thus, a mapping is performed from the target group personality profile to musical content descriptors ("reverse mapping") and, in the music content descriptor space, a search for songs matching the target profile may be performed. In this case, the reverse mapping from the target group personality profile to target music content descriptors is performed first, and then songs best matching those target content descriptors are chosen.

In both cases, the output is a list of media items (e.g. music tracks) matching to the defined target group.

The term "similarity search" shall comprise a range of mechanisms for searching large spaces of objects (here profiles) based on the similarity between any pair of objects (e.g. profiles). Nearest neighbor search and range queries are examples of similarity search. The similarity search may rely upon the mathematical notion of metric space, which allows the construction of efficient index structures in order to achieve scalability in the search domain. Alternatively, non-metric spaces, such as Kullback-Leibler divergence or Embeddings learned e.g. by neural networks may be used in the similarity search. Nearest neighbor search is a form of proximity search and can be expressed as an optimization problem of finding the point in a given set that is closest (or most similar) to a given point. Closeness is typically expressed in terms of a dissimilarity function: the less similar the objects, the larger the dissimilarity function values. In the present case, the (dis)similarity of content descriptor sets is the metric for the search.

As mentioned above, the search for the best matching media item for a target group may be performed in the content descriptor set domain by comparing the target content descriptor set with the content descriptor sets of the media items, e.g. the content descriptor sets for individual songs. The target content descriptor set may be derived from the target profile or from a product or brand profile as mentioned above. This search may be performed by:
- matching of features of the content descriptor sets (depending on which features of a content descriptor set are present or not);
- matching of values of features of content descriptor sets (numeric search);
- searching ranges of such features (e.g. a particular mood is between 75% and 100%);
- vector-based matching and similarity computation: computing how "close" (similar in terms of numeric distance) values of a target content descriptor set and a media content descriptor sets are, by comparing their numeric features (e.g. using a distance measure, such as Euclidean distance, Manhattan distance, Cosine distance, or other methods such as Kullback-Leibler divergence, etc.);
- machine learning based learned similarity, where a machine or deep learning algorithm learns a similarity function based on examples provided to the algorithm; this learned similarity function can then be permanently used in an embodiment.

In other embodiments, the media similarity engine may use one or more of a user's personality profile, the user's current situation or context and the current mood of the user for
- recommending music "in real time" on an online streaming platform;
- suggesting music on a mobile device application; and/or
- automatically playing music according to one's profile (lean-back radio).

For example, a user's listening history is analyzed by the personality profiling engine, as described above. In this way, the user's personality profile and/or the emotional profile of a music listener (including his/her mood) is determined. Next, similar to determining the target group for specific music, the media similarity engine may be configured to determine and find music best fitting an individual person (user), based on the person's (long-term) personal music listening history and/or personality profile and/or (short-term) mood profile and/or personality profile, a weighted mix between short-term and long-term personality profile, and optionally user context and environment information. The context and environment of the person can be determined by other numeric factors, e.g. measured from a mobile or other personal user device where location data, weather data, movement data, body signal data etc. can be derived. This may be performed instantly, during a user is listening in a listening session. For example, based on the songs he or she listened to before, and a pre-analysis of the songs according to music content descriptors, songs are chosen that best match the user's personality profile. For this, the user's personality profile is mapped to a target content descriptor set which is then compared with media content descriptor sets as explained above. For example, a similarity search is performed between the target content descriptor set and media content descriptor sets and the best matching media content descriptor sets (and corresponding media items) determined (and possibly ranked according to their matching score). The output is a list of songs proposed for listening, and can be updated in real-time, based on new input, such as an updated listening history.

Optionally, in a similar way, from a set of songs (e.g. an album, a playlist or a set of songs of the same artist) music content descriptor sets are aggregated (as described above) and compared to the target content descriptor set, in order to recommend artists, albums or playlists instead of individual songs to the listener.

The system may output a list of tracks, artists, or albums aligned with the personality profile of the individual, together with a matching score: a value that indicates of how well each output item matches. The computation of the matching score may be performed by the similarity search as set out above.

In other embodiments, the personality profiling engine and the media similarity engine are configured to determine a user or group of users for a specific target personality profile and select the best matching user (user group) for the target profile for receiving further information related to the target profile. The personality profiling engine may analyze one or more media items associated with a user or user group for its content in terms of acoustical attributes, genres, styles, moods, etc. It then generates a description of the user or user group (in the form of a personality profile). After a personality profile is determined for each of a plurality of users or user groups, the personality profiling engine compares the personality profiles of the plurality of users or user groups with the target personality profile and determines at least one user or user group having the best matching personality profile(s) with regards to the target profile. The target profile may be specified by a personality profile following a personality profile scheme such as MBTI, OCEAN, Enneagram, Ego-Equilibrium, or others, similar to the definition of user profiles. The profile may optionally be enriched by person-related parameters (such as age, sex, etc.).

In more detail, the audio in a set of music songs associated with a user is analyzed to derive its music content descriptors including semantic descriptors and/or emotional descriptors. Optionally, aggregation of said descriptors (using different methods) for a number of tracks (which can represent an album or an artist) is performed and the user's emotional profile is determined, e.g. by computing the average of the moods and/or other descriptors of multiple songs (possibilities: mean, RMS or weighted average, etc.). Then a mapping is performed from musical content descriptors to a personality profile as described above. The system then outputs and stores profiles for a plurality of users, defined by one of the different personality profile schemes. The profiles may be provided in numeric form, e.g. floating-point numbers for different profile scores within the mentioned schemes.

In embodiments, the media similarity engine may use one or more of a user's personality profile, the user's current situation or context and the current mood of the user for searching the user with the best match to the target profile. For example, a user's listening history is analyzed by the personality profiling engine, as described above. In this way, the user's personality profile and/or the emotional profile of a music listener (including his/her mood) is determined. Next, the media similarity engine may be configured to determine and find users best fitting the target profile, based on the person's (long-term) personal music listening history and/or personality profile and/or (short-term) mood profile and/or personality profile, a weighted mix between short-term and long-term personality profile, and optionally user context and environment information. The context and environment of the person can be determined by other numeric factors, e.g. measured from a mobile or other personal user device where location data, weather data, movement data, body signal data etc. can be derived. This may be performed instantly, during a user is listening in a listening session.

Alternatively, a search (e.g. similarity search, or exact score matching) can be performed in the content descriptor set space by comparing the target content descriptor set and media content descriptor sets (possibly aggregated, i.e. emotional profile) corresponding to individual users. Then, the media content descriptor sets that best match the target content descriptor set are identified. Again, as above, the term "similarity search" shall comprise a range of mechanisms for searching large spaces of objects (here profiles or content descriptor sets) based on the similarity between any pair of objects (e.g. profiles or content descriptor sets).

In an embodiment, the media similarity engine is configured to select an individual (user) who matches with a product or a personality profile of a target group. In this embodiment, an advertising customer or brand that uses the disclosed system first defines a target group by setting the score values within a certain personality profile scheme (schemes such as MBTI, OCEAN, Enneagram, Ego-Equilibrium, or others), or defines a brand/product profile with attributes of a brand or product that describe it in a psychological, emotional or marketing-like way, thereby providing a target personality profile.

The system may have already (pre-)analyzed some users' music tastes (listening history, favorite tracks / albums / artists) to profile the users. The media similarity engine then finds individuals that match the given product profile or profile of a target group. The output is a list of users (e.g. by user IDs) fitting a brand/product profile or specified target group. The identified individuals can then be targeted with specific advertisements.

In embodiments, the selection of an individual (user) by matching his/her personality profile with a personality profile of a target group is based on the definition of a target group: a target group may be defined by setting the values of a target profile within a certain personality profile scheme (such as MBTI, OCEAN, Enneagram, Ego-Equilibrium, or others).

The mapping of a target group to individuals may be based on a similarity search of the (defined) personality profile of the target group to the personality profiles of a set of users (e.g. pre-computed, determined based on their listening habits). Comparing profiles by similarity search and generation of matching scores has been explained above. Individuals corresponding to the personality profiles may be ranked based on the matching scores of their profiles. A threshold for the matching score may be applied to select the best matching group of individuals.

As mentioned above, the search for matching users can be performed in the content descriptor set domain by comparing a target content descriptor set (generated by mapping the target group profile via mapping rules to the content descriptor set domain) and media content descriptor sets corresponding to individual users (i.e. their emotional profiles), and selecting the best matching media content descriptor sets (and corresponding users).

In other embodiments, the selection of an individual (user) by matching his/her personality profile with a product profile may be based on the definition of a product profile: an advertising customer or a brand customer defines which kind of emotions they provide with each product in each advertisement.

In an example for generating a product profile, marketing experts define product attributes and values, similarly as a target group is specified with the attributes in a personality profile (e.g. MBTI attributes and % values ("scores")). Thus, a product profile may comprise, like a personality profile, attributes and scores defined by % values. These product attributes may be grouped into different groups. E.g. in an embodiment, 3 such groups (also called "appraisals") are "Evocation of the brand", "Symbolic of the product" and "Use of the product". Each of the 3 groups may have the same or different elements (attributes), and a product profile is defined by setting % values for those attributes.

In an example embodiment, each of the 3 groups (appraisals) can be defined by one of a number of terms (e.g. "25 positive emotions" commonly used in marketing), and assigning a % value to it: sympathy, kindness, respect, love, admiration, dreaminess, lust, desire, worship, euphoria, joy, amusement, hope, anticipation, surprise, energized, courage, pride, confidence, inspiration, enchantment, fascination, relief, relaxation, satisfaction.

In another embodiment, only the attribute terms associated with the product, and no associated values are defined. A choice of one word in each of the 3 appraisal groups forming the product profile will allow to define the corresponding musical content descriptors (in an embodiment mainly moods) needed to fit the product's target group. For example, finding individuals to advertise a new Harley Davidson motorbike could be performed by defining the following 3 attributes (one per appraisal group, respectively):
- Evocation of the brand: respect
- Symbolic of the product: amusement
- Use of the product: satisfaction

There are two ways for the mapping of a product profile to individuals' personality profiles:
a) Application of mapping rules from the attributes and scores that define a product profile to a personality profile (such as MBTI, etc.). This allows to derive a target personality profile that is compared to the (pre-computed) personality profiles of individuals using a similarity search as explained above. The mapping rules from a product profile to personality profile elements may be manually defined or learned by a machine learning algorithm similar to the mapping rules from content descriptors to personality profile elements as disclosed above.
b) Mapping from defined product profile to corresponding music content descriptors by specifying a set of mapping rules. Emotional profiles of users (individuals) or user groups are computed by aggregation of musical content descriptors as described before. A similarity search is performed in the space of music content descriptors in order to find the best-matching users or user groups based on their (ad hoc or pre-computed) emotional profiles which are represented by values within the music content descriptor space.

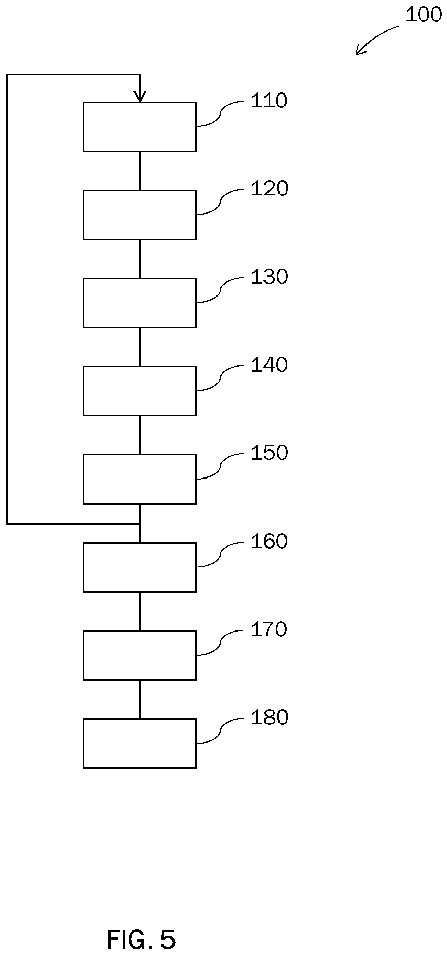

An embodiment of a method 100 to determine a user or user group that matches a target personality profile is shown in Fig.5. The method starts in step 110 with obtaining, for a user or user group, an identification of a group of media items comprising one or more media items. The identification of the group of media items may be a playlist or media consumption history of the user or user group.

For example, the identification of one or more media items comprises a short-term media consumption history of the user (or user group) and the personality profile characterizes the current mood of the user (or user group). The user's media items (music consumption history) are analyzed and a set of media content descriptors for each of the identified one or more media items is obtained in step 120. The media content descriptors comprise features characterizing acoustic descriptors, semantic descriptors and/or emotional descriptors of the respective media item and may be calculated directly from the media item or retrieved from a database. Details on the generation of media content descriptors are provided above.

The music content descriptors of all media items consumed by a user (in a defined time-span) are aggregated for an "aggregated music content descriptor" containing the same attributes as music content descriptors with aggregate %-values. In this manner, a set of aggregated media content descriptors for the entire group of the identified one or more media items (i.e. the user's emotional profile) is determined in step 130 based on the respective media content descriptors of the individual media items. For example, if the one or more identified media items correspond to a playlist, a set of aggregated media content descriptors is determined for the playlist. If only one media item is identified, the set of aggregated media content descriptors may be determined from segments of the media item.

In step 140 the set of aggregated media content descriptors is mapped to a personality profile that is defined according to a personality scheme as explained above. The mapping is optional and may be based on mapping rules. The generated set of aggregated media content descriptors (i.e. the emotional profile) for the user (or user group) is provided to the media similarity engine in step 150.

The above process is repeated for a plurality of users or user groups and emotional profiles are generated for each further user or user group. This way a plurality of emotional profiles is generated, each associated with its corresponding user or user group and characterizing the user or user group in terms of his/her/its emotional context.

A product or brand profile is defined in step 160. For example, the term "respect" is selected for the group "Evocation of the brand". The product profile is then mapped via mapping rules to target content descriptors. For example, a mapping from the product profile's attribute "respect" to the music content descriptors is defined: The term "respect" is associated with:
∘ a high %-value of "Warm-hearted" and a high %-value of "Heroic" in the category of "moods";
∘ a low %-value of "Flowing", a low %-value of "Stillness" and a low %-value of "Lyrical" in the category of "rhythmic moods".

Hence, a target content descriptor set is generated from the product or brand profile. It is to be noted that step 160 may be performed independent of steps 110-150 and before, simultaneous, or after the steps to generate the users' emotional profiles.

In step 170 the emotional profiles of the users or user groups are compared with the target content descriptor set and at least one user or user group having the best matching emotional profile is determined. The at least one user or user group having the best matching emotional profile is/are selected. Hence, users that best match the mapping from product profile to the aggregated music content descriptors in their consumption history based on a similarity search approach are identified and output together with a matching score.

In step 180 a new media item corresponding to the target profile is selected for presentation to the at least one determined user or user group. For example, an electronic message comprising the new media item is automatically generated for the at least one determined user or user group and the generated message electronically transmitted to the user or user group. The electronic message (or the new media item) may comprise information on the product or brand associated with the target personality profile.

When the best matching users have been identified, an advertisement may be pushed first to users best-aligned with the product profile or target group of the brand, respectively. The system may output the list of identified users to target, e.g. by user identifier plus a matching score value of how well that user fits the brand or product.

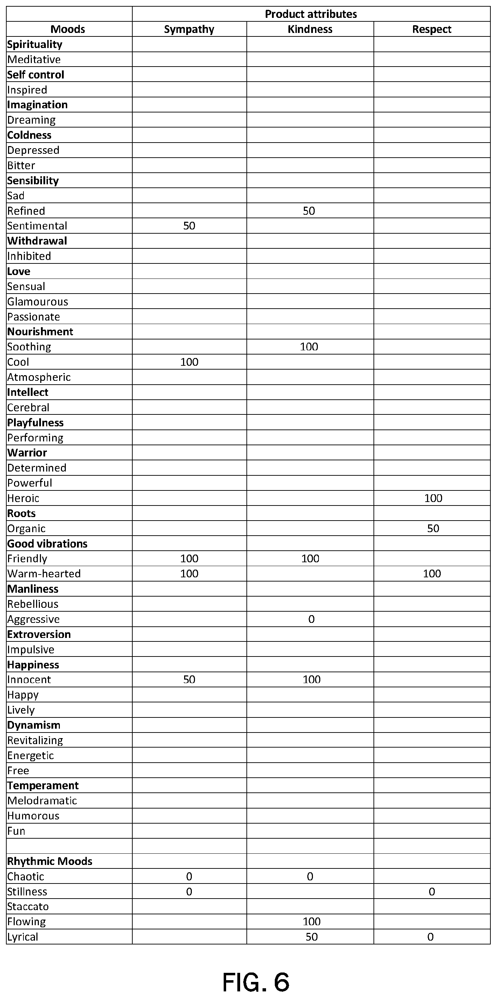

Fig. 6 illustrates the mapping from attributes of a product profile to mood content descriptors. It shows rules for mapping the product attribute "Sympathy" to moods such as "sentimental", "cool" and "friendly", etc. In this example, the attribute "Sympathy" requires the moods "sentimental" and "innocent" to be near 50%, while "cool", "friendly" and "warm-hearted" are required to be close to 100%. There are similar but different rules for other appraisals (groups of product attributes). In a similar way, the relations between product attributes "Kindness" and "Respect" and mood content descriptors are shown.

Thus, only user (or user group) emotional profiles with those mood criteria closely fulfilled will be considered candidates for a match. Depending on the similarity approach chosen, a closer numerical match will lead to a higher relevance score in the output of matching users (or user groups).

Similar to the mapping from content descriptors to personality profiles explained above, mapping rules define how a (aggregated) media content descriptor can be used to search for matching users. A mapping rule defines which and how a product profile attribute and its value contributes to a media content descriptor. Again, a mapping rule may be learned by a machine learning technique.

In an embodiment, the media similarity engine is configured for real-time selection of an individual by matching his/her current mood with a product profile or a personality profile of a target group. In this case, a brand defines a target group by a target personality profile. The target group may be defined by personality profile schemes such as MBTI, OCEAN, Enneagram, Ego-Equilibrium, or others. The system finds individuals having a short-term personality profile (a.k.a. "momentary user mood profile") at this moment that fits the given target profile. The brand can then target the individuals with specific advertisement.

In this embodiment, the system analyses in real-time the current user's media consumption (e.g. the last 10 music tracks) to profile the user at this moment and assign him/her into a target group. The definition of a brand's target group or a product profile and the mapping to music and persons (listeners) is done in the same way as described above. An advertisement is pushed to users aligned with the target group of the brand / product. While listening to music, a person is selected to receive individually targeted advertising or exposed to a particular branding or e-commerce campaign that best matches the current short-term personality profile (a.k.a. momentary user mood profile) of the person.

Similar to the previous embodiments, the search for users matching a product or brand or target profile may be performed in the domain of content descriptors by comparing aggregated media content descriptor sets associated with users to a target media content descriptor set generated via mapping rules from a product, brand or target profile. In this scenario, the user's aggregated media content descriptor sets (emotional profiles) are computed in "real-time", meaning using only a small number (e.g. 10) of the last tracks that the user has listened to. Using the personality profiling engine described above, the system computes a user emotional profile in a recent short-term timeframe. By doing this computation for all the users, the system stores in a database on a regular basis (e.g. every 10 tracks listened) all the "real-time" users' emotional profiles. Once the system knows the product or brand profile (as described above), finding a group of users with an emotional profile aligned to the product/brand profile can be done as described above. The system outputs the list of users that the brand should target now, because of the mood alignment between the brand or product and the user.

It should be noted that the apparatus (device, system) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of this disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### Glossary

The following terminology is used throughout the present document.

### Media

Media comprises all types of media items that can be presented to a user such as audio (in particular music) and video (including an incorporated audio track). Further, pictures, series of pictures, slides and graphical representations are examples of media items.

### Media content descriptors

Media content descriptors (a.k.a. "features") are computed by analyzing the content of media items. Music content descriptors (a.k.a. "music features") are computed by analyzing digital audio - either segments (excerpts) of a song or the entirety of a song. They are organized into music content descriptor sets, which comprise moods, genres, situations, acoustic attributes (key, tempo, energy, etc.), voice attributes (voice presence, voice family, voice gender (low- or high-pitched voice)), etc. Each of them comprises a range of descriptors or features. A feature is defined by a name and either a floating point or % value (e.g. bpm: 128.0, energy: 100%).

### Music

Music is one example for a media item and refers to audio data comprising tones or sounds, occurring in single line (melody) or multiple lines (harmony), and sounded by one or more voices or instruments, or both. A media content descriptor for a music item is also called a music content descriptor or musical profile.

### Emotional Profile

An emotional profile comprises one or more sets of media or music content descriptors related to moods or emotions and can be determined for a number of media items, in which case they are the aggregation of the content descriptors of the individual media items. They are typically derived by aggregating media/music content descriptors from a set of media items related to (e.g. consumed by) the persons or individuals. They comprise the same elements as the media/music content descriptors with the values determined by the aggregation of individual content descriptors (depending on the aggregation method used).

### Person (user, individual) and personality profile

A person (also called user or individual) is characterized by an emotional profile or a personality profile. An emotional profile is characterized by the elements of the media content descriptors (see above). Whereas, a personality profile comprises a number of different elements with % values: A personality profile's element is a weighted element within a personality profile scheme (defined by a name or attribute and % value, e.g. MBTI: "EI: 51%"). Personality profiles are defined by a personality profile scheme such as MBTI, OCEAN, Enneagram, etc. and may relate to:
- a user's mood (instant, short term) - i.e. a personality profile interpreted as a short-term emotional status of the user (also called mood profile of the user); or
- the user's personality type (long-term) - i.e. a personality profile derived from a long-term observation of the user's media consumption behavior.

### Target group

A target group describes a group of persons. It is specified as one or a combination of "personality profile(s)". Optionally, it may be enriched by person-related parameters (such as age, sex, etc.).

### Product

A product profile comprises attributes of a product that describe it in a psychological, emotional or marketing-like way. Attributes may be associated with a % value of importance.

### Brand

Product profiles may relate to brands. A brand profile comprises attributes of a brand that describe it in a psychological, emotional or marketing-like way. Attributes may be associated with a % value of importance.

### Mapping

Mapping refers to a set of rules that are implemented algorithmically and transform a profile from one entity (e.g. media item, music) to another (e.g. person, product, or brand) (or vice-versa). For example, mapping is applied between a set of content descriptors (emotional profile) and a personality profile according to a personality profile scheme.

### Similarity Search

A similarity search is an algorithmic procedure that computes a similarity, proximity or distance between two or more "profiles" of any kind (emotional profiles, personality profiles, product profiles etc.). The output is a ranked list of profile items having matching scores: a value that indicates of how well the profiles match.

Various Aspects and implementations of the invention may also be appreciated from the following enumerated example embodiments (EEEs), which are not claims.
EEE 1. Method for determining a best matching media content descriptor set, comprising:
   obtaining a target profile having a plurality of profile scores;
   mapping the target profile to a set of target content descriptors having a plurality of features, the mapping by applying at least one mapping rule that defines how a feature of a target content descriptor set is computed from profile scores;
   obtaining a plurality of media content descriptor sets, each media content descriptor set associated with a media item or a group of media items and having features comprising semantic descriptors for the respective media item or group of media items,_the semantic descriptors comprising at least one emotional descriptor for the media item or group of media items; and
   searching for at least one media content descriptor set having the best matching content descriptor set with respect to the target content descriptor set.
EEE 2. Method of EEE 1, wherein the media items comprise musical portions and preferably are pieces of music.
EEE 3. Method of EEE 1 or 2, wherein a feature of a media content descriptor set for a media item comprises one or more acoustic descriptors of the media item that are determined based on an acoustic analysis of the media item.
EEE 4. Method of any previous EEE, wherein a feature of a media content descriptor set for a media item is determined based on an artificial intelligence model that determines a semantic descriptor for the media item.
EEE 5. Method of EEE 4, wherein a semantic descriptor comprises one of genres, voice presence, voice gender, musical moods, and rhythmic moods.
EEE 6. Method of EEE 4 or 5, wherein an emotional descriptor is determined by the artificial intelligence model.
EEE 7. Method of any previous EEE, wherein the obtaining a plurality of media content descriptor sets comprises retrieving a media content descriptor set for a media item or a group of media items from a database.
EEE 8. Method of any previous EEE, wherein a mapping rule is learned by a machine learning technique.
EEE 9. Method of any previous EEE, wherein the search of best matching content descriptor sets is based on matching the target content descriptor set with media content descriptor sets having same or similar features as the target content descriptor set.
EEE 10. Method of any of EEE 1-8, wherein the search of best matching content descriptor sets is based on a similarity search where corresponding features of content descriptor sets are compared and matching scores indicating the similarity of respective pairs of content descriptor sets are computed.
EEE 11. Method of EEE 9 or 10, further comprising:
   ranking the media content descriptor sets according to their matching scores.
EEE 12. Method of any previous EEE, wherein the target profile corresponds to an individual user or a user group and is based on a personality scheme that defines a number of profile scores for target profile elements that represent personality traits.
EEE 13. Method of EEE 12, wherein the target profile is determined based on a short-term media consumption history of the user or the user group and characterizes the current mood of the user or the user group.
EEE 14. Method of EEE 12 or 13, wherein the target profile is determined based on a media consumption history or a playlist of the user or the user group.
EEE 15. Method of any of EEE 12-14, wherein a media item corresponding to the best matching media content descriptor set is selected for playback or recommendation to the user or the user group
EEE 16. Method of any of EEE 12-15, wherein information associated with a media item corresponding to the best matching media content descriptor set is provided to the user or to a user device associated with the user.
EEE 17. Method of any of EEE 12-16, wherein the searching of content descriptor sets depends on the context or environment of the user or user group corresponding to the target profile.
EEE 18. Method of any of EEE 1-11, wherein the target profile corresponds to a product or a brand, the method further comprising:
   determining a user or user group associated with the best matching media content descriptor set.
EEE 19. Method of EEE 18, wherein each media content descriptor set is associated with a user or a user group.
EEE 20. Method of EEE 18 or 19, wherein a media content descriptor set comprises aggregated features that characterize a group of media items that have been presented to the user or user group, in particular media items identified in a playlist associated with the user or user group.
EEE 21. Method of any of EEE 18-20, wherein a user personality profile is provided for the user or user group associated with the media content descriptor set, the personality profile comprises a plurality of personality scores for elements of the profile that represent personality traits of the user or user group based on a personality scheme.
EEE 22. Method of EEE 21, wherein the user personality profile is generated by mapping features of the associated media content descriptor set to personality scores, the user personality profile characterizing the user's personality or the user's mood.
EEE 23. Method of EEE 22, wherein the mapping of features of the media content descriptor set to personality scores is based on a mapping rule that defines how a personality score is computed from features of the media content descriptor set associated with the user.
EEE 24. Method of EEE 23, wherein the mapping rule is learned by a machine learning technique.
EEE 25. Method of any of EEE 18-24, wherein the search of best matching content descriptor sets depends on the context or environment of the users or user groups associated with the media content descriptor sets.
EEE 26. Method of any of EEE 18-25, wherein a media item corresponding to the target profile is selected for presentation to the user or user group.
EEE 27. Method of any of EEE 18-26, wherein an electronic message comprising information on the product or brand is automatically generated for the user or user group and the generated message electronically transmitted to the user or user group.
EEE 28. Computing device having a memory and a processor, configured to perform the method of any of the previous EEE.

## Claims

1. A computer-implemented method for generating a media content descriptor set for a media item comprising audio content, the method comprising:
obtaining, by at least one processor, the audio content of the media item;
generating, by an acoustic analysis unit executed by the at least one processor, a frequency-domain representation of the audio content, the frequency-domain representation comprising a spectrogram of the audio content;
determining, by the acoustic analysis unit, based on the spectrogram, one or more acoustic descriptors for the media item;
determining, by an artificial intelligence unit executed by the at least one processor and comprising at least one trained neural network operating on the frequency-domain representation, one or more semantic descriptors for the media item, the one or more semantic descriptors comprising at least one emotional descriptor for the media item; and
generating the media content descriptor set for the media item from the one or more acoustic descriptors and the one or more semantic descriptors, and storing the media content descriptor set in a media content descriptor database.

2. The method of claim 1, wherein the frequency-domain representation is a Log-Mel-Spectrogram.

3. The method of claim 1 or 2, wherein generating the frequency-domain representation comprises segmenting the audio content into a plurality of audio segments and generating a respective frequency-domain representation for each of the audio segments; and wherein determining the one or more acoustic descriptors and/or the one or more semantic descriptors comprises determining respective descriptors for the audio segments and aggregating the respective descriptors of the audio segments to obtain the one or more acoustic descriptors and/or the one or more semantic descriptors for the media item.

4. The method of any preceding claim, wherein the at least one trained neural network comprises at least one convolutional neural network trained on a training dataset comprising a plurality of audio examples annotated by human experts.

5. The method of any preceding claim, wherein the one or more acoustic descriptors comprise at least one of a tempo, a key, a mode, a duration, a rhythm presence, and a spectral energy of the audio content.

6. The method of any preceding claim, wherein the one or more semantic descriptors comprise at least one of a genre, a voice presence, a voice gender, a musical mood, and a rhythmic mood.

7. The method of any preceding claim, wherein at least one of the one or more acoustic descriptors and the one or more semantic descriptors is represented as a numerical value indicating a probability that the media item belongs to a respective acoustic class or semantic class.

8. The method of any preceding claim, wherein the media item comprises a musical portion and preferably is a piece of music.

9. The method of any preceding claim, further comprising:
obtaining a plurality of media content descriptor sets, each media content descriptor set generated according to any preceding claim and associated with a respective media item of a plurality of media items;
obtaining a target content descriptor set representative of a target profile associated with a target group;
searching, among the plurality of media content descriptor sets, for at least one media content descriptor set that best matches the target content descriptor set; and
identifying, based on the searching, at least one media item of the plurality of media items for the target group.

10. The method of claim 9, wherein searching comprises computing, for each media content descriptor set of the plurality of media content descriptor sets, a matching score indicating a similarity between the media content descriptor set and the target content descriptor set, based on a distance measure comprising at least one of a Euclidean distance, a Manhattan distance, a Cosine distance, and a Kullback-Leibler divergence; and ranking the plurality of media content descriptor sets according to the respective matching scores.

11. The method of claim 9 or 10, wherein the target content descriptor set is obtained by mapping, by applying at least one mapping rule, a target profile of the target group to the target content descriptor set, the target profile comprising a plurality of profile scores for elements of the target profile that represent personality traits of the target group; and wherein the target group corresponds to a product or a brand.

12. The method of claim 11, wherein the at least one mapping rule is learned by a machine learning technique.

13. The method of any of claims 9 to 12, further comprising selecting the identified at least one media item for playback, recommendation, or presentation to a user or user group of the target group; and/or transmitting information associated with the identified at least one media item to a computing device.

14. A computing device comprising a memory and at least one processor communicatively coupled with the memory, wherein the at least one processor is configured to perform the method of any of claims 1 to 13.

15. A computer program product comprising instructions which, when executed by at least one processor, cause the at least one processor to perform the method of any of claims 1 to 13.
